# EUROPÄISCHE PATENTSCHRIFT

(11) **EP 4 168 711 B1**
(45) Veröffentlichungstag und Bekanntmachung des Hinweises auf die Patenterteilung: **24.09.2025**
(21) Anmeldenummer: 21723652.0
(22) Anmeldetag: 27.04.2021
(51) Int. Cl.: F21V 7/00, G02B 6/00, F21V 8/00, F21Y 103/10, F21Y 115/10, F21Y 113/00, F21Y 113/20

(54) **ANORDNUNG ZUR LICHTABGABE UND LEUCHTE**
ASSEMBLY FOR LIGHT EMISSION, AND LUMINAIRE
ENSEMBLE D'ÉMISSION DE LUMIÈRE, ET LUMINAIRE

(30) Priorität: 18.06.2020 DE 102020116146
(43) Veröffentlichungstag der Anmeldung: 26.04.2023
(73) Patentinhaber: Zumtobel Lighting GmbH, 6850 Dornbirn (AT)
(72) Erfinder: SCHWAIGHOFER, Andreas, 6850 Dornbirn (AT)
(74) Vertreter: Thun, Clemens
(86) Internationale Anmeldenummer: PCT/EP2021/061027
(87) Internationale Veröffentlichungsnummer: WO 2021/254682

(56) Entgegenhaltungen:
- EP-A2- 2 485 073
- DE-U1- 202013 101 824
- US-A1- 2012 320 626
- US-A1- 2014 043 856

## Beschreibung

Die vorliegende Erfindung betrifft eine Anordnung zur Lichtabgabe sowie eine Leuchte mit einer entsprechenden Anordnung. Bei der Leuchte kann es sich insbesondere um einen sog. Decken-Wandfluter handeln, der trotz eines gleichmäßigen Erscheinungsbildes in der Lage ist, stark gerichtetes Licht abzugeben, um Decken- oder Wandbereiche effizient beleuchten zu können.

Das Erscheinungsbild von Leuchten hängt oftmals stark von dem für die Leuchte vorgesehenen Anwendungsfall ab. Grund hierfür ist, dass bestimmte Arten der Lichtabgabe oftmals nur in einer bestimmten Art und Weise erzielt werden können.

Bspw. werden häufig großflächige, möglichst homogen Licht abgebende Leuchten gewünscht, da diese für eine angenehme Helligkeit sorgen und aufgrund ihres Erscheinungsbildes mit verhältnismäßig geringen Leuchtdichten von Beobachtern als angenehm empfunden werden. Derartige größere leuchtende Flächen können allerdings oftmals lediglich im Rahmen einer diffusen Lichtabgabe realisiert werden, sodass das von den entsprechenden Leuchten abgegebene Licht zwar zur Aufhellung größerer Bereiche in einem zu beleuchtenden Raum genutzt werden kann, allerdings nicht auf bestimmte Bereiche konzentriert höhere Leuchtdichten zur Verfügung stellt.

Derartige lokal höhere Leuchtdichten werden stattdessen eher mit Hilfe speziell ausgestalteter optischer Systeme realisiert, die dazu ausgelegt sind, das von den Leuchtmitteln abgegebene Licht konzentriert bzw. gebündelt in einen bestimmten Winkelbereich abzugeben. Solche optischen Systeme führen dann allerdings eher zu kleineren lichtabgebenden Bereichen für eine Leuchte, die sich dann hinsichtlich ihres Erscheinungsbildes deutlich von den oben beschriebenen, großflächig Licht abgebenden Leuchten unterscheiden. Gerichtete Lichtabgaben werden deshalb eher mit Hilfe sog. Strahler oder Spots oder mit verhältnismäßig schmalen Leuchten realisiert.

Die EP 2 485 073 A2 zeigt eine Leuchte mit diffuser und gebündelter Lichtabgabe, wobei die Leuchte eine erste Lichtquelle, eine zweite Lichtquelle, ein Lichtleitelement mit einer Schmalseite und einer Flachseite sowie eine Lichtabgabefläche aufweist. Die Leuchte ist hierbei so gestaltet, dass ein von der ersten Lichtquelle erzeugtes erstes Licht über die Schmalseite in das Lichtleitelement eintritt.

In DE 20 2013 101 824 U1 wird eine Leuchte mit einstellbarer Lichtabstrahlcharakteristik vorgestellt, wobei die Leuchte neben einer Lichtquelle ein Lichtaustrittselement aufweist, und wobei zwischen der Lichtquelle und dem Lichtaustrittselement ein optisches Element angeordnet ist, welches verstellbar gelagert ist.

Die US 2012/320626 beschäftigt sich mit einer Beleuchtungseinheit, die eine Leuchte mit einem abwärts gerichteten Licht bildet und hierbei ein einheitliches äußeres Erscheinungsbild hat. Die Leuchte umfasst einen kantenbeleuchteten Lichtleiter, der von seinem Umfang her beleuchtet wird, und weiterhin ein Downlight, das oberhalb des Lichtleiters angeordnet ist und einen Downlight-Strahl nach unten erzeugt. Der Downlight-Strahl tritt von der Oberseite durch die Unterseite des Lichtleiters aus und tritt aus der Unterseite des Lichtleiters als gerichteter Strahl aus.

Aus der US 2014/0043856 Al sind diffraktive Leuchten zur Flächenbeleuchtung bekannt. Die diffraktiven Oberflächenmerkmale sind hierbei so beschaffen, dass sie das geführte Licht aus dem Lichtleiter extrahieren.

Großflächig Licht abgebende Leuchten, die also ein homogenes und damit angenehmes Erscheinungsbild aufweisen und dennoch stark gerichtetes Licht abgeben, sind also mit den bislang bekannten Beleuchtungskonzepten nicht realisierbar. Dennoch besteht in gewissen Situationen ein Wunsch dahingehend, beide Arten der Lichtabgabe, also einerseits eine großflächige Lichtabgabe und andererseits die Abgabe eines stark gerichteten Lichts miteinander zu kombinieren, um einerseits das Erscheinungsbild einer Leuchte zu verbessern, andererseits deren Lichtabstrahlcharakteristik an ein gewünschtes Einsatzgebiet anzupassen. Der vorliegenden Erfindung liegt die Aufgabenstellung zugrunde, hierfür eine entsprechende Lösung zur Verfügung zu stellen.

Die Aufgabenstellung wird durch eine Anordnung zur Lichtabgabe, welche die Merkmale des Anspruchs 1 oder des Anspruchs 2 aufweist, gelöst. Vorteilhafte Weiterbildungen der Erfindung sind Gegenstand der abhängigen Ansprüche.

Die erfindungsgemäße Lösung beruht auf dem Gedanken, zwei unterschiedliche Arten der Lichtabgabe im Rahmen einer einzigen Anordnung zur Lichtabgabe miteinander zu kombinieren. Hierbei wird zum einen die bekannte Lichtleitertechnik zur Realisierung einer großflächigen Lichtabgabe genutzt, zum anderen kommen zusätzliche Leuchtmittel mit einem zugehörigen optischen System zum Einsatz, mit deren Hilfe eine stark gerichtete Lichtabgabe erzielt wird, wobei auch für das von diesen zusätzlichen Leuchtmitteln gerichtet abgegebene Licht das Lichtleitelement zur Abstrahlung genutzt wird. Hierdurch wird die Möglichkeit eröffnet, trotz eines monolithischen, also gleichmäßig hinterleuchteten Erscheinungsbilds einer Leuchte eine gerichtete Lichtabgabe zu erzielen.

Gemäß sowohl eines ersten als auch eines zweiten Aspekts der vorliegenden Erfindung wird dementsprechend eine Anordnung zur Lichtabgabe vorgeschlagen, welche aufweist:
- ein plattenförmiges Lichtleitelement, welches aus einem transparenten Material besteht und zwei im Wesentlichen parallel zueinander angeordnete Flachseiten aufweist, wobei eine der beiden Flachseiten eine Lichtabstrahlseite des Lichtleitelements bildet;
- erste Leuchtmittel, die an einer die beiden Flachseiten miteinander verbindenden Längsseite des Lichtleitelements angeordnet und dazu ausgebildet sind, Licht über diese Längsseite in das Lichtleitelement einzustrahlen, wobei das Lichtleitelement dazu ausgebildet ist, das Licht dieser ersten Leuchtmittel zu verteilen und zumindest einen Teil des Lichts über die Lichtabstrahlseite flächig abzugeben;
- zweite Leuchtmittel sowie ein den zweiten Leuchtmitteln zugeordnetes optisches System, welche an der der Lichtabstrahlseite gegenüberliegenden Flachseite des Lichtleitelements angeordnet und dazu ausgebildet sind, Licht mit einer gerichteten Lichtverteilung abzugeben,
wobei das von den zweiten Leuchtmitteln und dem zugehörigen optischen System abgegebene Licht durch das Lichtleitelement hindurchtritt und dieses an der Lichtabstrahlfläche verlässt, ohne wesentlich durch das Lichtleitelement beeinflusst zu werden.

Lichtleitelemente zur Realisierung einer großflächigen Lichtabgabe sind an sich bereits bekannt und werden wie eingangs erwähnt oftmals in sog. Flächenleuchten verwendet. In gleicher Weise sind auch optische Systeme bekannt, über die stark gerichtet Licht abgegeben wird. Mit der vorliegenden Erfindung wird nunmehr vorgeschlagen, beide Beleuchtungskonzepte miteinander zu kombinieren, allerdings derart, dass die über einen eher kleineren Bereich realisierte stark gerichtete Lichtabgabe für einen Beobachter beim Betrachten der Leuchte nicht oder nur unwesentlich erkennbar ist. Aus Sicht eines Beobachters erscheint stattdessen die Leuchte im Wesentlichen gleichmäßig großflächig hell, was üblicherweise als besonders angenehm empfunden wird. Hierdurch wird die Möglichkeit eröffnet, die erfindungsgemäße Anordnung zur Lichtabgabe für völlig neue Einsatzgebiete zu verwenden.

Gemäß einem zweiten Aspekt der Erfindung ist ferner eine Leuchte mit einer solchen Anordnung zur Lichtabgabe vorgesehen, wobei die Abdeckung im Schnitt L-förmig ausgebildet ist mit einem ersten Schenkel, der die im Wesentlichen parallel zum Lichtleitelement ausgerichtete Abstrahlfläche bildet, sowie einem zweiten Schenkel, der der den ersten Leuchtmitteln gegenüberliegenden Längsseite des Lichtleitelements zugeordnet ist.

Gemäß einem ersten Aspekt der Erfindung ist das Lichtleitelement erfindungsgemäß dazu ausgebildet, einen weiteren Teil des Lichts der ersten Leuchtmittel über eine den ersten Leuchtmitteln gegenüberliegende Längsseite abzugeben. In diesem Fall erfolgt also zusätzlich zur Lichtabgabe über die flache Lichtabstrahlfläche des Lichtleitelements noch eine weitere Lichtabgabe in einer Richtung, die im Wesentlichen senkrecht zur Lichthauptabstrahlrichtung der Anordnung liegen wird. Hierdurch können zusätzliche Bereiche eines Raums, in dem sich die Leuchte mit der erfindungsgemäßen Anordnung zur Lichtabgabe befindet, beleuchtet werden. Wie nachfolgend noch näher erläutert wird, würde sich insbesondere anbieten, eine entsprechende Leuchte bspw. im Übergangsbereich zwischen der Wand und Decke eines Raums anzuordnen, wobei die mit den zweiten Leuchtmitteln realisierte gerichtete Lichtabgabe bspw. dazu verwendet wird, die Decke aufzuhellen, während hingegen die weitere Lichtabgabe über das Lichtleitelement den unterhalb der Leuchte liegenden Wandbereich aufhellt.

Die zweiten Leuchtmittel und das zugehörige optische System sind wie bereits erwähnt derart ausgeführt, dass sie über einen kleineren Bereich das Licht gerichtet abstrahlen. Dieser Bereich ist insbesondere kleiner als die Lichtabstrahlfläche des Lichtleitelements, sodass gemäß dem ersten Aspekt erfindungsgemäß dieses Licht also lediglich über einen Teilbereich der zugehörigen Flachseite in das Lichtleitelement eingekoppelt wird. Die weiteren Bereiche der Flachseite des Lichtleitelements, also die entsprechenden Bereiche der Rückseite des Lichtleitelements sind dann vorzugsweise mit einem Reflektor bedeckt, um das von den ersten Leuchtmitteln erzeugte Licht effizient nutzen zu können. Insbesondere ist diesen weiteren Bereichen der Flachseite des Lichtleitelements also ein Reflektor, vorzugsweise ein diffus streuender Reflektor zugeordnet.

Dabei ist gemäß dem ersten Aspekt erfindungsgemäß ferner vorgesehen, dass für den oben genannten Fall, dass über eine den ersten Leuchtmitteln gegenüberliegende Längsseite zusätzlich Licht abgegeben wird, der Reflektor in dem den ersten Leuchtmitteln gegenüberliegenden Bereich des Lichtleitelements sich von der Rückseite des Lichtleitelements weg krümmend oder sich linear entfernend ausgebildet ist. Vorzugsweise kann der Reflektor hierbei das Lichtleitelement mit einem gewissen Abstand überragen, was dazu führt, dass auch die zusätzliche Lichtabgabe zu der weiteren Seite hin nicht lediglich über einen äußerst schmalen Randstreifen des Lichtleitelements erfolgt, sondern ggf. über einen etwas breiteren Bereich einer zugehörigen Leuchtenabdeckung. Auch diese Maßnahme trägt zur Verbesserung des Erscheinungsbildes der Leuchte bei.

Das optische System zum Erzielen der gerichteten Lichtabgabe für das von den zweiten Leuchtmitteln abgegebene Licht kann in verschiedener Weise realisiert werden. Eine erste Möglichkeit würde beispielsweise darin bestehen, ein entsprechend ausgestaltetes Reflektorsystem zu nutzen, welches zumindest einen, vorzugsweise einen verspiegelten Reflektor aufweist. Derartige optische Systeme sind bereits aus sog. Wallwasher-Leuchten bekannt, also Leuchten, die dazu ausgelegt sind, einen unterhalb der Leuchte befindlichen Wandbereich aufzuhellen. Hierbei kann insbesondere vorgesehen sein, dass die zweiten Leuchtmittel derart angeordnet sind, dass sie Licht in einer zur Lichtabstrahlseite des Lichtleitelements entgegengesetzten Richtung abgeben. Insbesondere können hierbei die zweiten Leuchtmittel zumindest eine LED-Platine aufweisen, welche an der der Lichtabstrahlseite gegenüberliegenden Flachseite des Lichtleitelements angeordnet und derart ausgerichtet ist, dass die LEDs von dem Lichtleitelement wegweisen. Der in diesem Fall genutzte Reflektor ist dann vorzugsweise in einer Ebene senkrecht zu den Flachseiten des Lichtleitelements konkav geformt, insbesondere konkav gekrümmt. Er sorgt als sog. "Rückreflektor" für eine entsprechende Umlenkung des Lichts, derart, dass dieses wie gewünscht gerichtet durch das Lichtleitelement hindurch abgestrahlt wird.

Für den Fall, dass die zweiten Leuchtmittel mit Hilfe mehrerer LEDs realisiert werden, ergibt sich oftmals das Problem, dass LEDs im Wesentlichen punktförmige Lichtquellen darstellen, die allerdings durch einen Beobachter idealerweise nicht als einzelne helle Punkte wahrgenommen werden sollen. Weiterhin können LEDs hinsichtlich der Farbe bzw. des Farbtons des abgegebenen Lichts leichte Abweichungen voneinander aufweisen, sodass idealerweise das Licht vor einer entsprechenden Lichtabgabe in geeigneter Weise gemischt werden sollte. Hierzu kann vorgesehen sein, dass das optische System der zweiten Leuchtmittel ein leicht lichtstreuendes Element aufweist, welches im Hinblick auf die zweiten Leuchtmittel derart angeordnet ist, dass das von den zweiten Leuchtmitteln abgegebene Licht zunächst durch das lichtstreuende Element hindurchtritt, bevor es auf den Reflektor trifft. Insbesondere kann dann vorgesehen sein, dass das lichtstreuende Element gemeinsam mit weiteren reflektierenden Flächen eine sog. Mischkammer begrenzt, in der die zweiten Leuchtmittel angeordnet sind und die das von den LEDs emittierte Licht zunächst leicht vergleichmäßigt, bevor es durch den verspiegelten Reflektor in der gewünschten Weise umgelenkt und gebündelt wird.

Das oben beschriebene optische System mit Hilfe einer oder mehrerer Reflektoren bietet sich insofern an, als hierdurch eine verhältnismäßig flache Bauweise realisiert werden kann, mit deren Hilfe die Abmessungen der Leuchte im Hinblick auf die nichtlichtabgebenden Flächen reduziert werden können. Allerdings kann die gewünschte gerichtete Lichtabgabe ggf. auch mit anderen optischen Mitteln realisiert werden, sofern diese eine entsprechende Bündelung des Lichts gewährleisten. Insbesondere könnte auch vorgesehen sein, das optische System für die zweiten Leuchtmittel durch Linsen oder vergleichbare lichtbrechende Elemente zu bilden.

Der eingangs genannte angestrebte Effekt, nämlich bei einem gleichmäßigen Erscheinungsbild einer größeren Licht abgebenden Fläche trotz allem Licht gerichtet abzustrahlen, wird selbstverständlich durch die kombinierte Lichtabgabe beider Leuchtmittel erzielt. Dennoch wäre es denkbar, beide Leuchtmittel derart auszugestalten, dass diese getrennt voneinander steuerbar, bspw. in ihrer Helligkeit einstellbar sind. Hierdurch eröffnen sich weitere Möglichkeiten, die Lichtabgabe der erfindungsgemäßen Anordnung flexibel einzustellen.

Erfindungsgemäß wird ferner eine Leuchte vorgeschlagen, die eine Anordnung zur Lichtabgabe wie oben beschrieben aufweist. Die Leuchte kann hierbei insbesondere ein Gehäuse aufweisen, in dem die Anordnung zur Lichtabgabe angeordnet ist, wobei das Gehäuse eine lichtdurchlässige Abdeckung aufweist, welche zumindest eine im Wesentlichen parallel zum Lichtleitelement ausgerichtete Abstrahlfläche aufweist.

Ist zusätzlich wie oben beschrieben vorgesehen, dass ein Teil des Lichts der ersten Leuchtmittel auch über die entsprechend gegenüberliegende Längsseite des Lichtleitelements angegeben wird, so kann gemäß einer besonders bevorzugten Ausführungsform des ersten Aspekts der Erfindung vorgesehen sein, dass die Abdeckung im Schnitt L-förmig ausgebildet ist und hierbei einen ersten Schenkel aufweist, der die im Wesentlichen parallel zum Lichtleitelement ausgerichtete Abstrahlfläche bildet, sowie einen zweiten Schenkel, der der den ersten Leuchtmitteln gegenüberliegenden Längsseite des Lichtleitelements zugeordnet ist. Insbesondere wird hierdurch eine Leuchte zur Verfügung gestellt, welche als sog. Decken-Wandfluter genutzt werden kann, um zwei aufeinander senkrecht stehende Flächen eines Raums zu beleuchten.

Nachfolgend soll die Erfindung anhand der beiliegenden Zeichnung näher erläutert werden. Es zeigen:
- Figur 1: schematisch die Darstellung einer als Decken-Wandfluter genutzten Leuchte, welche eine erfindungsgemäße Anordnung zur Lichtabgabe beinhaltet;
- Figur 2: eine Schnittdarstellung der Leuchte von Figur 1 mit den verschiedenen Komponenten der Anordnung zur Lichtabgabe;
- Figur 3: die Abstrahlung des Lichts der ersten Leuchtmittel sowie die hieraus resultierende Lichtverteilung und
- Figur 4: die Abstrahlung des Lichts der zweiten Leuchtmittel und die hieraus resultierende Lichtverteilung.

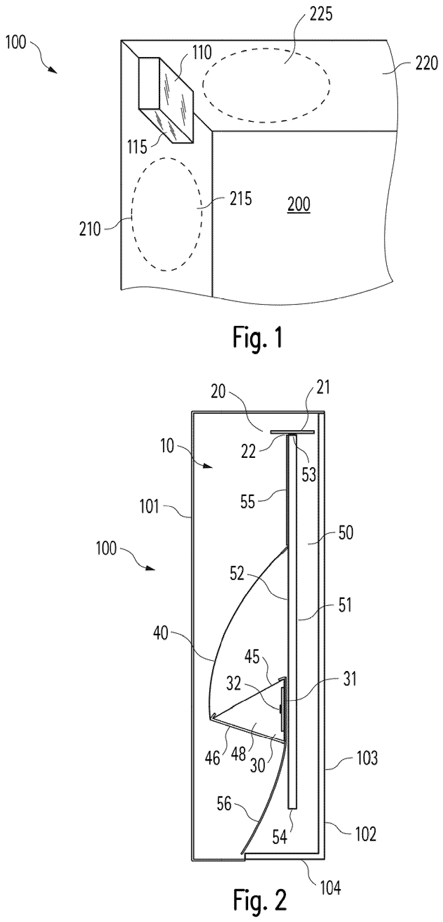

Figur 1 zeigt als Anwendungsbeispiel für die vorliegende Erfindung eine allgemein mit dem Bezugszeichen 100 versehene Leuchte, die als sogenannter Decken-Wandfluter am oberen Ende der Wand 210 eines Raums 200 angeordnet werden soll. Die Leuchte 100 befindet sich hierbei im Übergangsbereich zwischen der Wand 210 und der Decke 220 und weist eine schmale längliche Form mit einer größeren vorderen Lichtabstrahlseite 110 auf.

Die Leuchte 100 soll im dargestellten Ausführungsbeispiel sowohl die Decke 220 als auch die darunter liegende Wand 210 beleuchten. Einerseits wird also eine Lichtabgabe in dem der Leuchte 100 vorgeordneten Deckenbereich 225 angestrebt, andererseits soll ein Teil des Lichts auch auf den darunter liegenden Wandbereich 215 abgegeben werden. Neben der vorderen Lichtabstrahlfläche 110 weist deshalb die Leuchte im dargestellten Ausführungsbeispiel auch an der Unterseite eine weitere zu Lichtabgabe genutzt Fläche 115 auf.

Grundsätzlich ist es kein Problem, Leuchten zu realisieren, die Licht in zwei unterschiedliche Bereiche bzw. Richtungen abgeben. Um allerdings wie in Figur 1 dargestellt die Decke 220 effizient beleuchten zu können, muss die Leuchte 100 das hierfür vorgesehene Licht stark gerichtet seitlich abgeben. Gleichzeitig ist allerdings im vorliegenden Fall auch gewünscht, dass insbesondere die vordere Lichtabstrahlfläche 110, welche eine verhältnismäßig große Außenfläche der Leuchte 100 darstellt, möglichst homogen leuchtend und damit für einen Beobachter angenehm erscheint. Da dieses angestrebte Erscheinungsbild allerdings konträr zu der erforderlichen gerichteten Lichtabgabe zur Seite hin ist, war es bislang nicht bzw. nur schwer möglich, Leuchten mit einem derartigen Anforderungsprofil und derartigen Lichtabgabeeigenschaften zur Verfügung zu stellen.

Mit der vorliegenden Erfindung wird nunmehr eine Lösung bereitgestellt, welche das Realisieren einer Leuchte mit den oben genannten gewünschten Eigenschaften ermöglicht. Kernbestandteil der Lösung ist hierbei eine in besondere Weise ausgebildet Anordnung zur Lichtabgabe, die im Folgenden anhand von Figur 2 näher erläutert werden soll.

Figur 2 zeigt eine Schnittdarstellung der Leuchte 100 in einer Ebene senkrecht zur Längsrichtung der Leuchte 100. Erkennbar ist, dass die Leuchte 100 ein im Querschnitt etwa rechteckiges Gehäuse 101 mit einer nachfolgend noch näher beschriebenen lichtdurchlässigen Abdeckung 102 aufweist, wobei innerhalb dieses von dem Gehäuse 101 und der Abdeckung 102 umschlossenen Raums die erfindungsgemäße, mit dem Bezugszeichen 10 versehene Anordnung zur Lichtabgabe angeordnet ist.

Die erfindungsgemäße Anordnung zur Lichtabgabe 10 besteht hierbei aus zwei Komponenten zur Lichterzeugung und Lichtabgabe, die in erfindungsgemäßer Weise miteinander kombiniert werden, um die angestrebten Lichtabstrahleigenschaften aufzuweisen.

Eine erste Komponente weist hierbei erste Leuchtmittel 20 sowie ein diesen ersten Leuchtmitteln 20 zugeordnetes plattenförmiges, aus einem lichtdurchlässigen Material bestehendes Lichtleitelement 50 auf. Die ersten Leuchtmittel 20 werden vorzugsweise durch LED-Leuchtmittel gebildet, die eine sich in Längsrichtung der Leuchte 100 erstreckende Platine 21 (selbstverständlich können gegebenenfalls in Längsrichtung auch mehrere Platinen hintereinander angeordnet sein) mit LEDs 22 aufweist. Die LEDs 22 sind an einer Längsseite 53 des Lichtleitelements 50 angeordnet, welche zwei im Wesentlichen parallel zueinander, im vorliegenden Fall vertikal verlaufende Flachseiten 51 und 52 miteinander verbindet.

Die Anordnung der LEDs 22 ist hierbei derart, dass das von ihnen abgegebene Licht möglichst vollständig über die entsprechende Längsseite 53, welche somit die Lichteintrittsseite des Lichtleitelements 50 darstellt, in dieses eingekoppelt wird. In bekannter Weise erfolgt dann eine Verteilung dieses Lichts der ersten Leuchtmittel 20 durch Mehrfachreflexionen an den beiden Flachseiten 51, 52 des Lichtleitelements 50, wobei hierbei das Licht dann möglichst gleichmäßig über das gesamte Lichtleitelement 50 verteilt und dann - zumindest zum Teil - über die vordere Flachseite 51, welche die Lichtaustrittsseite des Lichtleitelements 50 darstellt, abgegeben wird. Das hierzu erforderliche Auskoppeln der Lichtstrahlen erfolgt in üblicher Weise durch entsprechende sogenannte Auskoppelstrukturen, die in der Regel an der der Lichtaustrittsseite 51 gegenüberliegenden Rückseite 52 des Lichtleitelements 50 ausgebildet sind. Es kann sich hierbei um entsprechende Aufrauhungen oder anderweitig eingebrachte Strukturen handeln, die auftreffende Lichtstrahlen derart umlenken bzw. beeinflussen, dass sie das Lichtleitelement 50 über die vordere Flachseite 51 verlassen.

Die bislang beschriebene Nutzung des Lichtleitelements 50 ist bereits aus dem Stand der Technik bekannt und führt dazu, dass im Wesentlichen gleichmäßig über die gesamte vordere Flachseite 51 des Lichtleitelements 50 Licht abgegeben wird. Diese Lichtabgabe erfolgt mit verhältnismäßig geringen Leuchtdichten, sodass sich ein homogenes, für einen Beobachter angenehmes Erscheinungsbild der Leuchte 100 ergibt.

Allerdings kann mit Hilfe der bislang beschriebenen Lichtabgabe noch keine effiziente Beleuchtung des Deckenbereichs 225 erfolgen. Erfindungsgemäß ist deshalb vorgesehen, die bislang beschriebene Lichtabgabe basierend auf klassischer Lichtleitertechnologie durch eine zusätzliche gerichtete und intensivere Lichtabgabe zu ergänzen.

Hierzu sind zweite Leuchtmittel 30 vorgesehen, deren Licht ebenfalls über das Lichtleitelement 50 in Lichtabstrahlrichtung der Leuchte 100, in Figur 2 also zur rechten Seite hin abgegeben wird. Dieses Licht wird nunmehr allerdings mit Hilfe der nachfolgend noch näher beschriebenen optischen Mittel stark gerichtet bzw. gebündelt und derart durch das Lichtleitelement 50 abgestrahlt, dass das Lichtleitelement 50 die gewünschte gerichtete Lichtabgabe nicht beziehungsweise nur minimal beeinflusst. In Kombination hieraus ergibt sich nach wie vor eine größere, im Wesentlichen gleichmäßig hell leuchtende Fläche, die für das Erscheinungsbild der Leuchte 100 verantwortlich ist, wobei trotz allem Licht gerichtet abgegeben wird, um die Decke 220 effizient aufzuhellen. Dieser gerichtet abgegebene Lichtanteil ist beim Betrachten der Leuchte 100 für einen Beobachter nicht beziehungsweise nur unwesentlich wahrnehmbar, sodass dieser das angestrebte homogene Erscheinungsbild der Leuchte 100 nicht beeinträchtigt.

Grundsätzlich kann die Erzeugung und Abstrahlung der gerichteten Lichtkomponente in unterschiedlicher Weise erfolgen. Denkbar wäre beispielsweise die Nutzung von Linsen oder anderen geeigneten lichtbrechenden optischen Elementen. In Figur 2 ist allerdings eine besonders bevorzugte Ausführungsform für diese zweiten Leuchtmittel dargestellt, die eine Realisierung der Leuchte 100 mit einer möglichst schmalen Bauform ermöglicht und ferner auch zu einer gleichmäßigeren Lichtabgabe führt.

Die zweiten Leuchtmittel 30 weisen zunächst wiederum eine längliche Platine 31 (beziehungsweise gegebenenfalls mehrere Platinen) mit darauf angeordneten LEDs 32 auf. Die Anordnung der LED-Platine 31 erfolgt nun an der Rückseite, also an der der Lichtaustrittsseite 51 gegenüberliegenden Flachseite 52 des Lichtleitelements 50, wobei allerdings die Platine 31 wie in Figur 2 erkennbar derart orientiert ist, dass die LEDs 32 von dem Lichtleitelement 50 wegweisen. Durch die LEDs 32 abgegebenes Licht wird also zunächst in eine Richtung entgegengesetzt zur Lichtabstrahlrichtung der Leuchte 100 abgegeben, wobei dann eine entsprechende Umlenkung mit Hilfe eines konkav geformten, insbesondere konkav gekrümmten Reflektors 40 erfolgt.

Die Nutzung derartiger Reflektoren, die in diesem Fall dann oftmals auch als "Rückreflektor" bezeichnet werden, ist aus der Nutzung sogenannter Wallwasher bekannt. Der Reflektor 40 ist in diesem Fall vorzugsweise hochreflektierend ausgeführt bzw. verspiegelt, sodass das von den LEDs 32 abgegebene und durch den Reflektor 40 zurückgeworfene Licht auf Grund der konkaven Ausgestaltung in gewünschter Weise gebündelt, also auf einen bestimmten Winkelbereich ausgerichtet wird. Dies führt zu der angestrebten Ausrichtung des Lichts derart, dass der Deckenbereich 225 wie gewünscht beleuchtet wird.

LEDs stellen sogenannte punktförmige, also sehr kleine Lichtquellen dar. Bei der Nutzung des verspiegelten Reflektors 40 besteht hierbei dann die Gefahr, dass das von den LEDs 32 der zweiten Leuchtmittel 30 abgegebene Licht derart reflektiert wird, dass es beim Verlassen der Leuchte 100 und anschließenden Beleuchten des Deckenbereichs 225 immer noch als individuelle Strahlenbündel wahrgenommen wird. Dieses Problem besteht bei dem Licht der ersten Leuchtmittel 20, die auch durch LEDs gebildet sind weniger, da hier aufgrund der Mehrfachreflexionen durch das Lichtleitelement 50 bereits eine ausreichende Durchmischung der einzelnen Strahlenbündel stattfindet. Um dies nun auch bei dem Licht der zweiten Leuchtmittel 30 zu erreichen, ist vorgesehen, dass das von den LEDs 32 der zweiten Leuchtmittel 30 abgegebene Licht zunächst zumindest geringfügig gestreut und gemischt wird, bevor es auf den Reflektor 40 trifft.

Hierzu ist vorgesehen, dass eine schwach lichtstreuende Scheibe oder Folie 45 zum Einsatz kommt, die sich vom unteren Endbereich 41 des Reflektors 40 bis zur Oberkante der LED-Platine 31 erstreckt. Gleichzeitig ist ein diffus streuende Reflektor 46 vorgesehen, der sich von der Unterseite der LED-Platine 31 bis zur Unterseite 41 des Reflektors 40 erstreckt. Die LED-Platine 31, der Diffusor 45 sowie der Reflektor 46 begrenzen also einen im dargestellten Fall im Querschnitt etwa dreieckförmigen Bereich, in dem die LEDs 32 angeordnet sind. Dieser Bereich bildet eine sogenannte Mischkammer 48, welche für eine zumindest leichte Durchmischung des von den LEDs 32 abgegebenen Lichts sorgt, bevor dieses auf den Reflektor 40 fällt. Insbesondere wird jeder Lichtstrahl des von den LEDs 32 emittierten Lichts zumindest einmal, nämlich durch den Diffusor 45 beeinflusst, sodass eine gewisse Vergleichmäßigung stattfindet, bevor dann mit Hilfe des Reflektors 40 das Licht gerichtet in die gewünschte Lichtabstrahlrichtung umgelenkt wird. Gegebenenfalls kann hierbei vorgesehen sein, dass die LED-Platine 31 auf einem - wiederum diffus reflektierenden - Reflektor oder anderem Träger ruht bzw. selbst diffus reflektierend ausgebildet ist, um tatsächlich die Mischkammer 48 vollständig durch diffus streuende beziehungsweise diffus reflektierende Elemente zu umschließen.

Das mit Hilfe des Reflektors 40 gerichtet in Lichtabstrahlrichtung umgelenkte Licht tritt dann über die Rückseite 52 des Lichtleitelements 50 in dieses ein und verlässt dieses an dessen Lichtabstrahlseite 51. Hier findet allerdings keine beziehungsweise keine nennenswerte Beeinflussung dieser Lichtstrahlen statt, sodass die entsprechende Lichtkomponente der zweiten Leuchtmittel 30 auch nach Verlassen des Lichtleitelements 50 noch ihre durch den Reflektor 40 hervorgerufene Lichtverteilung aufweist, also in der gewünschten Weise gerichtet ist und somit die Decke 220 aufhellen kann. Letztendlich führt dies dazu, dass das Licht der beiden Leuchtmittel 20 und 30 kombiniert über das Lichtleitelement 50 abgegeben wird und die oben genannten, angestrebten Eigenschaften aufweist.

Erkennbar ist anhand der Darstellung von Figur 2 auch, dass das gerichtete Licht der zweiten Leuchtmittel 30 nur über einen mittleren Teilbereich des Lichtleitelements 50 (in vertikaler Richtung gesehen) zur Vorderseite hin abgegeben wird. An den weiteren Bereichen hingegen ist nicht vorgesehen, dass Licht von der Rückseite her durch das Lichtleitelement 50 hindurchtritt. Hier kann deshalb zur Erhöhung der Effizienz der Anordnung 10 vorgesehen sein, dass an der Rückseite 52 des Lichtleitelements 50 diesen Bereichen wiederum ein Reflektor beziehungsweise Reflektoren zugeordnet sind, die verhindern sollen, dass ungewollt Licht das Lichtleitelement 50 über dessen Rückseite 52 verlässt.

Wie in Figur 2 erkennbar ist, kann hierbei der entsprechende Reflektor 55 unmittelbar an der Rückseite 52 des Lichtleitelements 50 anliegend vorgesehen sein. Dies gilt insbesondere für denjenigen Bereich, der oberhalb des Bereichs liegt, in dem das Licht der zweiten Leuchtmittel 30 durch den Lichtleiter 50 hindurchgeleitet wird.

Im unteren Bereich ist im vorliegenden Fall hingegen eine etwas andere Ausgestaltung des Reflektors 56 vorgesehen, die sich aus dem Wunsch ergibt, wie eingangs erwähnt auch den unterhalb der Leuchte 100 liegenden Wandbereich 215 zu beleuchten. Ein weiterer Teil des von den ersten Leuchtmitteln 20 in das Lichtleitelement 50 eingekoppelten Lichts soll deshalb auch zur Unterseite hin abgegeben werden, was im vorliegenden Fall dadurch ermöglicht wird, dass die der Lichteintrittsseite 53 gegenüberliegende Längsseite 54 nicht wie üblich reflektierend oder verspiegelt ausgeführt sondern stattdessen derart gestaltet ist, dass in vertikaler Richtung vollständig durch das Lichtleitelement 50 geleitete Lichtstrahlen dieses über dessen Unterseite 54 verlassen können.

Um nun zu ermöglichen, dass dieser Anteil des Lichts auch tatsächlich auf den schräg unterhalb der Leuchte 100 befindlichen Wandbereich fällt, ist der entsprechende Reflektor 56 an der Rückseite des Lichtleitelements 50 wie dargestellt derart gekrümmt ausgeführt, dass er zur Unterseite hin divergierend von der Rückseite 52 des Lichtleitelements 50 wegläuft und ferner auch die Unterseite 54 des Lichtleitelements 50 mit einem gewissen Abstand überragt. Über die Längsseite 54 austretendes Licht kann somit auch schräg nach unten die Leuchte 100 verlassen und damit wie gewünscht den Wandbereich 215 beleuchten. Auch ein sich linear von der Rückseite 52 des Lichtleitelements 50 entfernender Reflektor wäre denkbar.

Anzumerken ist an dieser Stelle allerdings, dass auf die Lichtabgabe zur Unterseite hin gegebenenfalls auch verzichtet werden könnte und stattdessen vorgesehen sein kann, dass ausschließlich über die vordere Lichtaustrittsfläche 51 des Lichtleitelements 50 Licht in der oben beschriebenen Weise einerseits großflächig und homogen und andererseits gerichtet abgegeben wird. In diesem Fall ist dann die der Lichteintrittsseite 53 gegenüberliegende Längsseite 54 des Lichtleitelements 50 lichtundurchlässig, vorzugsweise reflektierend ausgeführt, sodass hier keine Lichtstrahlen das Lichtleitelement 50 verlassen können. Alternativ hierzu wäre es in diesem Fall auch denkbar, an dieser Unterseite 54 weitere LEDs anzuordnen, die dann Bestandteil der ersten Leuchtmittel wären und ihr Licht ebenso wie die LEDs 22 in das Lichtleitelement 50 einkoppeln.

Um das Licht letztendlich in der durch die erfindungsgemäße Anordnung hervorgerufenen Lichtabgabe abstrahlen zu können, weist die Leuchte 100 die bereits erwähnte Abdeckung 102 auf, welche idealerweise klar beziehungsweise allenfalls leicht lichtstreuend ausgeführt sein kann.

Da die Lichtabgabe im dargestellten Fall über zwei Seiten der Leuchte 100 erfolgt, ist diese Abdeckung 102 wie in Figur 2 erkennbar, im Querschnitt L-förmig ausgeführt mit einem ersten Schenkel 103, der parallel zur Hauptebene des Lichtleitelements 50 verläuft und die großflächige Lichtabgabe sowie die Abgabe des gerichteten Lichts ermöglicht. Der hierzu senkrecht ausgerichtete untere Schenkel 104 hingegen ermöglicht die Abgabe des zur Beleuchtung des Wandbereichs 215 vorgesehenen Lichts. Er erstreckt sich dann bis zum unteren Ende des gekrümmten Reflektors 56, wobei durchaus auch denkbar wäre, dass über die gesamte Unterseite der Leuchte 100, also über die gesamte Breite hinweg, Licht nach unten abgegeben wird.

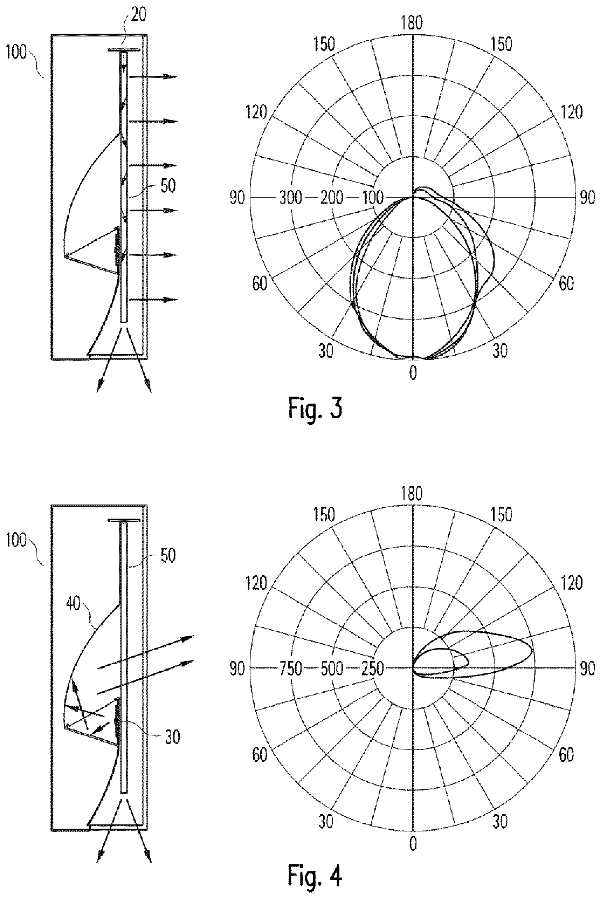

Die Wirkungsweise des erfindungsgemäßen Konzepts wird nochmals anhand der Figuren 3 und 4 verdeutlicht.

Figur 3 zeigt hierbei den Verlauf des von den ersten Leuchtmitteln 20 abgegebenen Lichts, wobei auf der rechten Seite die hieraus resultierende Lichtverteilungskurve dargestellt ist. Licht der ersten Leuchtmittel 20 wird also in das Lichtleitelement 50 eingekoppelt, über dessen Fläche verteilt und einerseits zur Vorderseite sowie andererseits nach unten hin abgegeben. Es ergibt sich hierbei die eher symmetrische, nach unten gerichtete Lichtverteilung, welche allerdings eine leichte Auswölbung in Vorwärtsrichtung beziehungsweise Lichtabstrahlrichtung zeigt. Diese ergibt sich durch die großflächige Auskopplung des Lichts über die Lichtabstrahlfläche 51. Damit dient dieses Licht primär dazu, den Wandbereich 215 zu beleuchten sowie der Leuchte 100 insgesamt ein monolithisches, also ein homogenes, gleichmäßig helles Erscheinungsbild zu verleihen.

Der Verlauf des von den zweiten Leuchtmitteln 30 abgegebenen Lichts sowie die hieraus resultierende Lichtverteilung ist hingegen in Figur 4 dargestellt. Erkennbar ist, dass dieser Lichtanteil ausschließlich in Lichtabstrahlrichtung, also nach vorne hin ausgerichtet und darüber hinaus auch sehr stark gebündelt ist. Es liegt eine Ausrichtung leicht schräg nach oben vor, die erforderlich ist, um den an die Leuchte 100 angrenzenden Deckenbereich 225 aufzuhellen.

Ohne die weitere Lichtabgabe der ersten Leuchtmittel 20 wäre dieser Lichtanteil als verhältnismäßig helles, schmales Strahlenbündel erkennbar, wobei allerdings auf Grund der erfindungsgemäßen Kombination nunmehr aus Sicht eines Beobachters die Leuchte 100 trotz allem mehr oder weniger gleichmäßig hell erscheint. Insgesamt werden damit die eingangs geschilderten gewünschten Lichtabgabeeigenschaften erzielt.

Anzumerken ist, dass gegebenenfalls vorgesehen sein könnte, beide Leuchtmittel 20, 30 getrennt voneinander steuerbar und beispielsweise in ihrer Helligkeit einstellbar zu gestalten. Hierdurch könnte die Lichtabgabe je nach Situation in gewünschter Weise angepasst werden. Ferner wäre es auch denkbar, die Leuchtmittel derart zu gestalten, dass sie in ihrer Farbe oder Farbtemperatur veränderbar sind. Schließlich wäre es wie bereits erwähnt auch denkbar, auf die Lichtabgabe zur Unterseite hin zu verzichten und lediglich eine Lichtabgabe über die vordere Flachseite der Anordnung vorzunehmen.

## Patentansprüche

1. Anordnung zur Lichtabgabe (100), aufweisend:
• ein plattenförmiges Lichtleitelement (50), welches aus einem transparenten Material besteht und zwei im Wesentlichen parallel zueinander angeordnete Flachseiten (51, 52) aufweist, wobei eine der beiden Flachseiten (51, 52) eine Lichtabstrahlseite des Lichtleitelements (50) bildet,
• erste Leuchtmittel (20), die an einer die beiden Flachseiten (51, 52) miteinander verbindenden Längsseite (53) des Lichtleitelements (50) angeordnet und dazu ausgebildet sind, Licht über diese Längsseite (53) in das Lichtleitelement (50) einzustrahlen, wobei das Lichtleitelement (50) dazu ausgebildet ist, das Licht der ersten Leuchtmittel (20) zu verteilen und zumindest einen Teil des Lichts über die Lichtabstrahlseite (51) abzugeben,
• zweite Leuchtmittel (30) sowie ein den zweiten Leuchtmitteln (30) zugeordnetes optisches System, welche an der der Lichtabstrahlseite (51) gegenüberliegenden Flachseite (52) des Lichtleitelements angeordnet (50) und dazu ausgebildet sind, Licht mit einer gerichteten Lichtverteilung abzugeben,
wobei das von den zweiten Leuchtmitteln (30) und dem optischen System abgegebene Licht durch das Lichtleitelement (50) hindurchtritt und dieses an der Lichtabstrahlseite (51) verlässt, ohne wesentlich durch das Lichtleitelement (50) beeinflusst zu werden, wobei das Lichtleitelement (50) dazu ausgebildet ist, einen weiteren Teil des Lichts der ersten Leuchtmittel (20) über eine den ersten Leuchtmitteln (20) gegenüberliegende Längsseite (54) abzugeben,
wobei die zweiten Leuchtmittel (30) und das optische System Licht über einen Teilbereich der zugehörigen Flachseite (52) in das Lichtleitelement (50) einstrahlen, wobei den weiteren Bereichen der Flachseite (52) des Lichtleitelements (50) ein Reflektor (55, 56), vorzugsweise ein diffus streuender Reflektor zugeordnet ist,
**dadurch gekennzeichnet,**
**dass** der Reflektor (56) an der den ersten Leuchtmitteln (20) gegenüberliegenden Seite des Lichtleitelements (50) sich von der Flachseite (52) des Lichtleitelements (50) entfernend, insbesondere weg krümmend ausgebildet ist, wobei der Reflektor (56) vorzugsweise das Lichtleitelement (50) mit einem Abstand überragt.

2. Leuchte (100) mit einer Anordnung zur Lichtabgabe (10), die Anordnung zur Lichtabgabe (100) aufweisend:
• ein plattenförmiges Lichtleitelement (50), welches aus einem transparenten Material besteht und zwei im Wesentlichen parallel zueinander angeordnete Flachseiten (51, 52) aufweist, wobei eine der beiden Flachseiten (51, 52) eine Lichtabstrahlseite des Lichtleitelements (50) bildet,
• erste Leuchtmittel (20), die an einer die beiden Flachseiten (51, 52) miteinander verbindenden Längsseite (53) des Lichtleitelements (50) angeordnet und dazu ausgebildet sind, Licht über diese Längsseite (53) in das Lichtleitelement (50) einzustrahlen, wobei das Lichtleitelement (50) dazu ausgebildet ist, das Licht der ersten Leuchtmittel (20) zu verteilen und zumindest einen Teil des Lichts über die Lichtabstrahlseite (51) abzugeben,
• zweite Leuchtmittel (30) sowie ein den zweiten Leuchtmitteln (30) zugeordnetes optisches System, welche an der der Lichtabstrahlseite (51) gegenüberliegenden Flachseite (52) des Lichtleitelements angeordnet (50) und dazu ausgebildet sind, Licht mit einer gerichteten Lichtverteilung abzugeben,
wobei das von den zweiten Leuchtmitteln (30) und dem optischen System abgegebene Licht durch das Lichtleitelement (50) hindurchtritt und dieses an der Lichtabstrahlseite (51) verlässt, ohne wesentlich durch das Lichtleitelement (50) beeinflusst zu werden, wobei die Leuchte ein Gehäuse (101) aufweist, in dem die Anordnung zur Lichtabgabe (10) angeordnet ist, wobei das Gehäuse (101) eine lichtdurchlässige Abdeckung (102) aufweist, welche zumindest eine im Wesentlichen parallel zum Lichtleitelement (50) ausgerichtete Abstrahlfläche aufweist,
**dadurch gekennzeichnet,**
**dass** die Abdeckung (102) im Schnitt L-förmig ausgebildet ist mit einem ersten Schenkel (103), der die im Wesentlichen parallel zum Lichtleitelement (50) ausgerichtete Abstrahlfläche bildet, sowie einem zweiten Schenkel (104), der der den ersten Leuchtmitteln (20) gegenüberliegenden Längsseite (54) des Lichtleitelements (50) zugeordnet ist.

3. Leuchte nach Anspruch 2,
**dadurch gekennzeichnet,**
**dass** das Lichtleitelement (50) dazu ausgebildet ist, einen weiteren Teil des Lichts der ersten Leuchtmittel (20) über eine den ersten Leuchtmitteln (20) gegenüberliegende Längsseite (54) abzugeben,

4. Leuchte nach einem der vorangehenden Ansprüche 2 und 3,
**dadurch gekennzeichnet,**
**dass** die zweiten Leuchtmittel (30) und das optische System Licht über einen Teilbereich der zugehörigen Flachseite (52) in das Lichtleitelement (50) einstrahlen, wobei den weiteren Bereichen der Flachseite (52) des Lichtleitelements (50) ein Reflektor (55, 56), vorzugsweise ein diffus streuender Reflektor zugeordnet ist.

5. Leuchte nach Anspruch 3 und Anspruch 4,
**dadurch gekennzeichnet,**
**dass** der Reflektor (56) an der den ersten Leuchtmitteln (20) gegenüberliegenden Seite des Lichtleitelements (50) sich von der Flachseite (52) des Lichtleitelements (50) entfernend, insbesondere weg krümmend ausgebildet ist, wobei der Reflektor (56) vorzugsweise das Lichtleitelement (50) mit einem Abstand überragt.

6. Anordnung zur Lichtabgabe nach Anspruch 1 oder Leuchte nach einem der vorherigen Ansprüche 2 bis 5,
**dadurch gekennzeichnet,**
**dass** das den zweiten Leuchtmitteln (30) zugeordnete optische System zumindest einen Reflektor (40) aufweist, vorzugsweise einen verspiegelten Reflektor.

7. Anordnung zur Lichtabgabe oder Leuchte nach Anspruch 6,
**dadurch gekennzeichnet,**
**dass** die zweiten Leuchtmittel (30) derart angeordnet sind, dass sie Licht in einer zur Lichtabstrahlseite (51) des Lichtleitelements (50) entgegengesetzten Richtung abgeben,
wobei die zweiten Leuchtmittel (30) insbesondere eine LED-Platine (31) aufweisen, welche an der der Lichtabstrahlseite (51) gegenüberliegenden Flachseite (52) des Lichtleitelements (50) angeordnet und derart ausgerichtet ist, dass die LEDs (52) von dem Lichtleitelement (50) weg weisen.

8. Anordnung zur Lichtabgabe oder Leuchte nach Anspruch 7,
**dadurch gekennzeichnet,**
**dass** der Reflektor (40) in einer Ebene senkrecht zu den Flachseiten (51, 52) des Lichtleitelements (50) konkav geformt, insbesondere konkav gekrümmt ist.

9. Anordnung zur Lichtabgabe oder Leuchte nach Anspruch 8,
**dadurch gekennzeichnet,**
**dass** das optische System ferner ein leicht lichtstreuendes Element (45) aufweist, welches im Hinblick auf die zweiten Leuchtmittel (30) derart angeordnet ist, dass das von den zweiten Leuchtmitteln (30) abgegebene Licht zunächst durch das lichtstreuende Element (45) hindurchtritt, bevor es auf den Reflektor (40) trifft.

10. Anordnung zur Lichtabgabe oder Leuchte nach Anspruch 9,
**dadurch gekennzeichnet,**
**dass** das lichtstreuende Element (45) gemeinsam mit reflektierenden Reflexionsflächen (46) eine Mischkammer (48) begrenzt, in der die zweiten Leuchtmittel (30) angeordnet sind.

11. Anordnung zur Lichtabgabe nach Anspruch 1 oder Leuchte nach einem der Ansprüche 2 bis 5,
**dadurch gekennzeichnet,**
**dass** das den zweiten Leuchtmitteln (30) zugeordnete optische System durch Linsen oder andere lichtbrechende Elemente gebildet ist.

12. Anordnung zur Lichtabgabe oder Leuchte nach einem der vorherigen Ansprüche,
**dadurch gekennzeichnet,**
**dass** die ersten und zweiten Leuchtmittel (20, 30) getrennt voneinander steuerbar sind.

13. Leuchte (100) mit einer Anordnung zur Lichtabgabe (10) nach einem der vorherigen Ansprüche 1 oder 6 bis 12.

14. Leuchte nach Anspruch 13,
aufweisend ein Gehäuse (101), in dem die Anordnung zur Lichtabgabe (10) angeordnet ist, wobei das Gehäuse (101) eine lichtdurchlässige Abdeckung (102) aufweist, welche zumindest eine im Wesentlichen parallel zum Lichtleitelement (50) ausgerichtete Abstrahlfläche aufweist.

15. Leuchte nach Anspruch 13,
**dadurch gekennzeichnet,**
**dass** die Abdeckung (102) im Schnitt L-förmig ausgebildet ist mit einem ersten Schenkel (103), der die im Wesentlichen parallel zum Lichtleitelement (50) ausgerichtete Abstrahlfläche bildet, sowie einem zweiten Schenkel (104), der der den ersten Leuchtmitteln (20) gegenüberliegenden Längsseite (54) des Lichtleitelements (50) zugeordnet ist.

## Claims

1. Arrangement for light emission (100), comprising:
• a planar light-guiding element (50) which is made from a transparent material and has two flat faces (51, 52) arranged substantially parallel to one another, one of the two flat faces (51, 52) forming a light-emitting face of the light-guiding element (50),
• first lamps (20), which are arranged on a longitudinal face (53), interconnecting the two flat faces (51, 52), of the light-guiding element (50) and are designed to radiate light into the light-guiding element (50) via this longitudinal face (53), the light-guiding element (50) being designed to distribute the light of the first lamps (20) and to emit at least a portion of the light via the light-emitting face (51),
• second lamps (30) and an optical system associated with the second lamps (30), which are arranged (50) on the flat face (52), opposite the light-emitting face (51), of the light-guiding element and are designed to emit light with a directed light distribution,
the light emitted by the second lamps (30) and by the optical system passing through the light-guiding element (50) and leaving it at the light-emitting face (51), without being significantly influenced by the light-guiding element (50),
the light-guiding element (50) being designed to emit a further portion of the light of the first lamps (20) via a longitudinal face (54) opposite the first lamps (20),
the second lamps (30) and the optical system radiating light into the light-guiding element (50) via a section of the associated flat face (52),
a reflector (55, 56), preferably a diffusely scattering reflector, being associated with the further regions of the flat face (52) of the light-guiding element (50),
**characterized in that,**
on the face, opposite the first lamps (20), of the light-guiding element (50), the reflector (56) becomes distanced from, in particular curves away from, the flat face (52) of the light-guiding element (50), the reflector (56) preferably projecting beyond the light-guiding element (50) at a distance.

2. Luminaire (100) comprising an arrangement for light emission (10), the arrangement for light emission (100) having:
• a planar light-guiding element (50) which is made from a transparent material and has two flat faces (51, 52) arranged substantially parallel to one another, one of the two flat faces (51, 52) forming a light-emitting face of the light-guiding element (50),
• first lamps (20), which are arranged on a longitudinal face (53), interconnecting the two flat faces (51, 52), of the light-guiding element (50) and are designed to radiate light into the light-guiding element (50) via this longitudinal face (53), the light-guiding element (50) being designed to distribute the light of the first lamps (20) and to emit at least a portion of the light via the light-emitting face (51),
• second lamps (30) and an optical system associated with the second lamps (30), which are arranged (50) on the flat face (52), opposite the light-emitting face (51), of the light-guiding element and are designed to emit light with a directed light distribution,
the light emitted by the second lamps (30) and by the optical system passing through the light-guiding element (50) and leaving it at the light-emitting face (51), without being significantly influenced by the light-guiding element (50),
the luminaire comprising a housing (101) in which the arrangement for light emission (10) is arranged, the housing (101) comprising a translucent cover (102) which has at least one emission surface oriented substantially parallel to the light-guiding element (50),
**characterized in that,**
the cover (102) is L-shaped in section having a first leg (103), which forms the emission surface oriented substantially parallel to the light-guiding element (50), and a second leg (104), which is associated with the longitudinal face (54), opposite the first lamps (20), of the light-guiding element (50).

3. Luminaire according to claim 2,
**characterized in that**
the light-guiding element (50) is designed to emit a further portion of the light from the first lamps (20) via a longitudinal face (54) opposite the first lamps (20).

4. Luminaire according to either of the preceding claims 2 and 3,
**characterized in that**
the second lamps (30) and the optical system radiate light into the light-guiding element (50) via a section of the associated flat face (52), a reflector (55, 56), preferably a diffusely scattering reflector, being associated with the further regions of the flat face (52) of the light-guiding element (50).

5. Luminaire according to claim 3 and claim 4,
**characterized in that,**
on the face, opposite the first lamps (20), of the light-guiding element (50), the reflector (56) becomes distanced from, in particular curves away from, the flat face (52) of the light-guiding element (50), the reflector (56) preferably projecting beyond the light-guiding element (50) at a distance.

6. Arrangement for light emission according to claim 1 or luminaire according to any of the preceding claims 2 to 5,
**characterized in that**
the optical system associated with the second lamps (30) comprises at least one reflector (40), preferably a mirrored reflector.

7. Arrangement for light emission or luminaire according to claim 6,
**characterized in that**
the second lamps (30) are arranged so as to emit light in a direction counter to the light-emitting face (51) of the light-guiding element (50),
the second lamps (30) in particular comprising an LED board (31) which is arranged on the flat face (52), opposite the light-emitting face (51), of the light-guiding element (50) and is oriented such that the LEDs (52) point away from the light-guiding element (50).

8. Arrangement for light emission or luminaire according to claim 7,
**characterized in that**
the reflector (40) is concavely shaped, in particular concavely curved, in a plane perpendicular to the flat faces (51, 52) of the light-guiding element (50).

9. Arrangement for light emission or luminaire according to claim 8,
**characterized in that**
the optical system further comprises a slightly light-scattering element (45) which is arranged with respect to the second lamps (30) such that the light emitted by the second lamps (30) first passes through the light-scattering element (45) before it impinges on the reflector (40).

10. Arrangement for light emission or luminaire according to claim 9,
**characterized in that**
the light-scattering element (45), together with reflective reflection surfaces (46), defines a mixing chamber (48) in which the second lamps (30) are arranged.

11. Arrangement for light emission according to claim 1 or luminaire according to any of claims 2 to 5,
**characterized in that**
the optical system associated with the second lamps (30) is formed by lenses or other light-refracting elements.

12. Arrangement for light emission or luminaire according to any of the preceding claims,
**characterized in that**
the first and second lamps (20, 30) can be controlled separately from one another.

13. Luminaire (100) comprising an arrangement for light emission (10) according to any of the preceding claims 1 or 6 to 12.

14. Luminaire according to claim 13,
comprising a housing (101) in which the arrangement for light emission (10) is arranged, wherein the housing (101) has a translucent cover (102) which has at least one emission surface oriented substantially parallel to the light-guiding element (50).

15. Luminaire according to claim 13,
**characterized in that,**
the cover (102) is L-shaped in section having a first leg (103), which forms the emission surface oriented substantially parallel to the light-guiding element (50), and a second leg (104), which is associated with the longitudinal face (54), opposite the first lamps (20), of the light-guiding element (50).

## Revendications

1. Agencement pour l'émission de lumière (100), présentant :
• un élément de guidage de lumière (50) en forme de plaque qui est constitué d'un matériau transparent et présente deux côtés plats (51, 52) disposés sensiblement parallèlement l'un à l'autre, dans lequel l'un des deux côtés plats (51, 52) forme un côté d'émission de lumière de l'élément de guidage de lumière (50),
• des premiers moyens d'éclairage (20) qui sont disposés sur un côté longitudinal (53) de l'élément de guidage de lumière (50) reliant les deux côtés plats (51, 52) l'un à l'autre et qui sont conçus pour émettre de la lumière dans l'élément de guidage de lumière (50) par l'intermédiaire dudit côté longitudinal (53), dans lequel l'élément de guidage de lumière (50) est conçu pour répartir la lumière des premiers moyens d'éclairage (20) et pour émettre au moins une partie de la lumière par l'intermédiaire du côté d'émission de lumière (51),
• des seconds moyens d'éclairage (30) ainsi qu'un système optique associé aux seconds moyens d'éclairage (30), lesquels sont disposés (50) sur le côté plat (52) de l'élément de guidage de lumière opposé au côté d'émission de lumière (51) et sont conçus pour émettre de la lumière avec une répartition de lumière dirigée,
dans lequel la lumière émise par les seconds moyens d'éclairage (30) et le système optique passe à travers l'élément de guidage de lumière (50) et quitte celui-ci au niveau du côté d'émission de lumière (51) sans être sensiblement influencée par l'élément de guidage de lumière (50),
dans lequel l'élément de guidage de lumière (50) est conçu pour émettre une autre partie de la lumière des premiers moyens d'éclairage (20) par l'intermédiaire d'un côté longitudinal (54) opposé aux premiers moyens d'éclairage (20),
dans lequel les seconds moyens d'éclairage (30) et le système optique émettent de la lumière dans l'élément de guidage de lumière (50) par l'intermédiaire d'une zone partielle du côté plat (52) associé,
dans lequel un réflecteur (55, 56), de préférence un réflecteur à diffusion diffuse, est associé aux autres zones du côté plat (52) de l'élément de guidage de lumière (50),
**caractérisé en ce que**
le réflecteur (56) est réalisé sur le côté de l'élément de guidage de lumière (50) opposé aux premiers moyens d'éclairage (20) de manière à s'éloigner du côté plat (52) de l'élément de guidage de lumière (50), en particulier de manière à s'éloigner de façon courbée, dans lequel le réflecteur (56) dépasse de préférence l'élément de guidage de lumière (50) d'une certaine distance.

2. Luminaire (100) comportant un agencement pour l'émission de lumière (10), l'agencement pour l'émission de lumière (100) présentant :
• un élément de guidage de lumière (50) en forme de plaque qui est constitué d'un matériau transparent et présente deux côtés plats (51, 52) disposés sensiblement parallèlement l'un à l'autre, dans lequel l'un des deux côtés plats (51, 52) forme un côté d'émission de lumière de l'élément de guidage de lumière (50),
• des premiers moyens d'éclairage (20) qui sont disposés sur un côté longitudinal (53) de l'élément de guidage de lumière (50) reliant les deux côtés plats (51, 52) l'un à l'autre et qui sont conçus pour émettre de la lumière dans l'élément de guidage de lumière (50) par l'intermédiaire dudit côté longitudinal (53), dans lequel l'élément de guidage de lumière (50) est conçu pour répartir la lumière des premiers moyens d'éclairage (20) et pour émettre au moins une partie de la lumière par l'intermédiaire du côté d'émission de lumière (51),
• des seconds moyens d'éclairage (30) ainsi qu'un système optique associé aux seconds moyens d'éclairage (30), lesquels sont disposés (50) sur le côté plat (52) de l'élément de guidage de lumière opposé au côté d'émission de lumière (51) et sont conçus pour émettre de la lumière avec une répartition de lumière dirigée,
dans lequel la lumière émise par les seconds moyens d'éclairage (30) et le système optique passe à travers l'élément de guidage de lumière (50) et quitte celui-ci au niveau du côté d'émission de lumière (51) sans être sensiblement influencée par l'élément de guidage de lumière (50),
dans lequel le luminaire présente un boîtier (101) dans lequel est disposé l'agencement pour l'émission de lumière (10), dans lequel le boîtier (101) présente un moyen de recouvrement (102) laissant passer la lumière qui présente au moins une surface d'émission orientée sensiblement parallèlement à l'élément de guidage de lumière (50),
**caractérisé en ce que**
le moyen de recouvrement (102) est réalisé en forme de L en coupe avec une première branche (103) qui forme la surface d'émission orientée sensiblement parallèlement à l'élément de guidage de lumière (50) et une seconde branche (104) qui est associée au côté longitudinal (54) de l'élément de guidage de lumière (50) opposé aux premiers moyens d'éclairage (20).

3. Luminaire selon la revendication 2,
**caractérisé en ce que**
l'élément de guidage de lumière (50) est conçu pour émettre une autre partie de la lumière des premiers moyens d'éclairage (20) par l'intermédiaire d'un côté longitudinal (54) opposé aux premiers moyens d'éclairage (20).

4. Luminaire selon l'une des revendications 2 et 3 précédentes,
**caractérisé en ce que**
les seconds moyens d'éclairage (30) et le système optique émettent de la lumière dans l'élément de guidage de lumière (50) par l'intermédiaire d'une zone partielle du côté plat (52) associé, dans lequel un réflecteur (55, 56), de préférence un réflecteur à diffusion diffuse, est associé aux autres zones du côté plat (52) de l'élément de guidage de lumière (50).

5. Luminaire selon la revendication 3 et la revendication 4,
**caractérisé en ce que**
le réflecteur (56) est réalisé sur le côté de l'élément de guidage de lumière (50) opposé aux premiers moyens d'éclairage (20) de manière à s'éloigner du côté plat (52) de l'élément de guidage de lumière (50), en particulier de manière à s'éloigner de façon courbée, dans lequel le réflecteur (56) dépasse de préférence l'élément de guidage de lumière (50) d'une certaine distance.

6. Agencement pour l'émission de lumière selon la revendication 1 ou luminaire selon l'une des revendications 2 à 5 précédentes,
**caractérisé en ce que**
le système optique associé aux seconds moyens d'éclairage (30) présente au moins un réflecteur (40), de préférence un réflecteur réfléchissant.

7. Agencement pour l'émission de lumière ou luminaire selon la revendication 6,
**caractérisé en ce que**
les seconds moyens d'éclairage (30) sont disposés de telle sorte qu'ils émettent de la lumière dans une direction opposée au côté d'émission de lumière (51) de l'élément de guidage de lumière (50),
dans lequel les seconds moyens d'éclairage (30) présentent en particulier une platine à DEL (31) qui est disposée sur le côté plat (52) de l'élément de guidage de lumière (50) opposé au côté d'émission de lumière (51) et qui est orientée de telle sorte que les DEL (52) sont orientées à l'opposé de l'élément de guidage de lumière (50).

8. Agencement pour l'émission de lumière ou luminaire selon la revendication 7,
**caractérisé en ce que**
le réflecteur (40) est formé de manière concave, en particulier est courbé de manière concave, dans un plan perpendiculaire aux côtés plats (51, 52) de l'élément de guidage de lumière (50).

9. Agencement pour l'émission de lumière ou luminaire selon la revendication 8,
**caractérisé en ce que**
le système optique présente en outre un élément à faible diffusion de lumière (45) qui est disposé, par rapport aux seconds moyens d'éclairage (30), de telle sorte que la lumière émise par les seconds moyens d'éclairage (30) passe d'abord à travers l'élément à diffusion de lumière (45) avant de frapper le réflecteur (40).

10. Agencement pour l'émission de lumière ou luminaire selon la revendication 9,
**caractérisé en ce que**
l'élément à diffusion de lumière (45) délimite, conjointement avec des surfaces de réflexion (46) réfléchissantes, une chambre de mélange (48) dans laquelle sont disposés les seconds moyens (30) lumineux.

11. Agencement pour l'émission de lumière selon la revendication 1 ou luminaire selon l'une des revendications 2 à 5,
**caractérisé en ce que**
le système optique associé aux seconds moyens d'éclairage (30) est formé par des lentilles ou d'autres éléments réfractant la lumière.

12. Agencement pour l'émission de lumière ou luminaire selon l'une des revendications précédentes,
**caractérisé en ce que**
les premiers et seconds moyens d'éclairage (20, 30) peuvent être commandés séparément les uns des autres.

13. Luminaire (100) comportant un agencement pour l'émission de lumière (10) selon l'une des revendications 1 ou 6 à 12 précédentes.

14. Luminaire selon la revendication 13,
présentant un boîtier (101) dans lequel est disposé l'agencement pour l'émission de lumière (10), dans lequel le boîtier (101) présente un moyen de recouvrement (102) laissant passer la lumière qui présente au moins une surface d'émission orientée sensiblement parallèlement à l'élément de guidage de lumière (50).

15. Luminaire selon la revendication 13,
**caractérisé en ce que**
le moyen de recouvrement (102) est réalisé en forme de L en coupe avec une première branche (103) qui forme la surface d'émission orientée sensiblement parallèlement à l'élément de guidage de lumière (50) et une seconde branche (104) qui est associée au côté longitudinal (54) de l'élément de guidage de lumière (50) opposé aux premiers moyens d'éclairage (20).
